# EUROPEAN PATENT APPLICATION

(11) **EP 0 734 102 A2**
(43) Date of publication of application: **25.09.1996**
(21) Application number: 96301750.4
(22) Date of filing: 14.03.1996
(51) Int. Cl.: H01R 17/12, G01F 23/26

(54) **Connector for concentric tubes attached to a fuel gauge**

(30) Priority: 24.03.1995 US 410191; 24.03.1995 US 410160
(71) Applicant: THE WHITAKER CORPORATION, Wilmington, Delaware 19808 (US)
(72) Inventor: Shaffer, Howard Richard, Millersburg, Pennsylvania 17061 (US); Stahl, Daniel Eugene, Hummelstown, Pennsylvania 17036 (US); Rudy, William Jesse, Jr., Annville, Pennsylvania 17003 (US); Green, Eric Timothy, Harrisburg, Pennsylvania 17111 (US)
(74) Representative: Warren, Keith Stanley

(57) **Abstract**

A connector (210) for a fuel gauge in a fuel cell which has an inner tube (12) and a spaced-apart concentric outer tube (14). A housing (214) is mountable to outer tube (14) and a conductive portion thereof is electrically connected with outer tube (14). An insulated contact assembly is mounted in a bore in the housing (214) and extends through an opening (212) through the outer tube (14). A first end (222) of a center conductor (218) within the contact assembly at least extends to the inner tube (12) and makes electrical contact therewith, and is connected at second end by an electrical lead to the fuel gauge. An electrical lead also connects the conductive housing portion to the fuel gauge so that an electrical potential between the inner tube (12) and the outer tube (14) can be measured.

## Description

The present invention relates to a connector for concentric tubes and more particularly for transmitting an electrical signal from the tubes to a fuel gauge.

In certain applications there is a need to transmit electrical signals from two concentric tubes to a measuring device. One particular application is in an aircraft where the amount of fuel in a cell is determined by measuring the capacitance between the two concentric tubes which extend into the fuel cell. There are a plurality of cells on any single aircraft. Depending upon the type of aircraft and the nature and size of the cells containing fuel, the concentric tubes may be of varying diameters and the spacing between the tubes may vary. Also, any set of concentric tubes may be bent and have differing diameters and different spacing between the tubes. Connectors are known that have a frame mounted on the outer tube with an arcuate shield member between the frame and the arcuate outer surface of the outer tube and spaced therefrom. The arcuate shield member reduces stray capacitance between connector wires and is complementary to the outer tube having a limited range of curvature resulting in the need to have a series of connectors depending upon the degree of curvature of the outer cylinder. The inner tube is also connected through an opening in the outer tube. Electrical leads from the set of inner and outer tubes are brought to terminals on the frame for subsequent connection to the fuel gauge having a sensor to measure the capacitance. The frame and connectors are bulky requiring space for mounting and access. This contributes to additional weight in an environment where weight and space are major design considerations.

Thus, there is a need for a simple, compact connector for a fuel gauge which can be used with concentric tubes of varying diameters and of varying space between the tubes. The connector must be capable of being retrofit on existing tubes.

The present invention provides a small and lightweight electrical connector for a fuel gauge in a fuel cell, that can be used with concentric tubes of varying sizes and diameters. In accordance with the teaching of the present invention, there is disclosed a connector for a fuel gauge in a fuel cell having an inner tube and a spaced-apart concentric outer tube, to connect electrical leads to the respective tubes. Each tube has, respectively, an inner wall and an outer wall, and a respective opening formed between the walls of each tube. The connector includes a conductive housing portion connectable to fuel gauge and the outer tube, and an inner contact assembly connected to the fuel gauge and extending through a bore of the connector and through an opening in the outer tube, and is movable to be engaged with the inner tube.

In a first embodiment, the connector includes a housing assembly having a bore formed therein and has a sleeve assembly slidably mounted in the bore and extending through the opening of the outer tube. A contact of the housing assembly electrically engages the outer tube and is electrically connected to the fuel gauge by an electrical lead. A contact assembly within the sleeve assembly has a first end extending from the bore and having engaging means thereon received in an opening in the inner tube and forming an electrical contact with the inner tube; a second end of the contact assembly is electrically connected to the fuel gauge by an electrical lead. In this manner, the fuel gauge may measure an electrical signal between the inner tube and the outer tube.

In a second embodiment, the connector includes a conductive adapter mounted to the outer tube and having a coaxially mounted conductor disposed in the axial center thereof, the conductor being electrically insulated from the adapter. The conductor has a first end extending between the outer cylindrical tube and the inner tube, and has at least one sharpened point thereon to engage the inner tube to assure electrical contact therewith. The conductor is spring loaded in the adapter wherein force is applied to the conductor to urge and hold it against the inner tube. The conductor has a second end connectable to one electrical lead outside the outer tube, the adapter being connectable to another electrical lead.

Embodiments of the present invention will now be described by way of example with reference to the accompanying drawings, in which:
FIGURE 1 is a side view showing the prior art arrangement having a frame to mount a terminal board and a shield member to the outer tube;
FIGURE 2 is an end view of the prior art arrangement of FIG. 1 showing a lead to the inner tube and the curved shield member mounted adjacent to the outer tube and held in place by the frame;
FIGURE 3 is a top plan view of the housing assembly of a first connector embodiment, with the movable sleeve assembly shown in phantom;
FIGURES 4 and 5 are side and front elevation views respectively of the housing assembly of FIG. 3;
FIGURE 6 is a partial cross-sectional view of the sleeve assembly of the present invention;
FIGURE 7 is a side elevation view with a partial cross section showing the sleeve assembly disposed in the housing assembly of the present invention and respectively attached to the inner tube and to the outer tube;
FIGURE 8 is an end view showing fingers of engaging means on the sleeve assembly;
FIGURES 9 to 14 are a series of cross sections showing the connector with varying diameters of inner and outer tubes with varying spaces between the tubes;
FIGURE 15 is an end view showing the outer tubes with the body of a second connector embodiment inside the tube and the spacer and nut outside the tube;
FIGURE 16 is an end view of the connector of FIG. 15 showing the body of the connector, the spacer and the nut secured to the outer tube, the adapter outside of the outer tube and the inner tube disposed inside the outer tube;
FIGURE 17 is an end view of the connector of FIG. 15 showing the connector attached to the outer tube and electrically contacting the inner tube;
FIGURE 18 is a partial cutaway view of the adapter of FIG. 16 with electrical leads; and
FIGURE 19 is a side elevation view of another embodiment of the connector attached to a threaded opening in the outer tube, the tubes being shown in cross section.

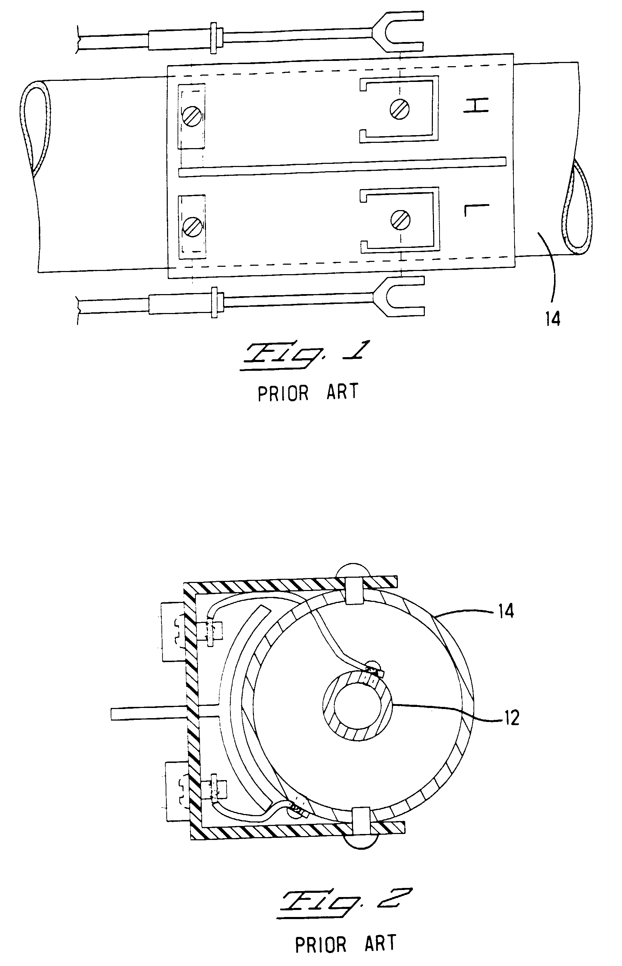

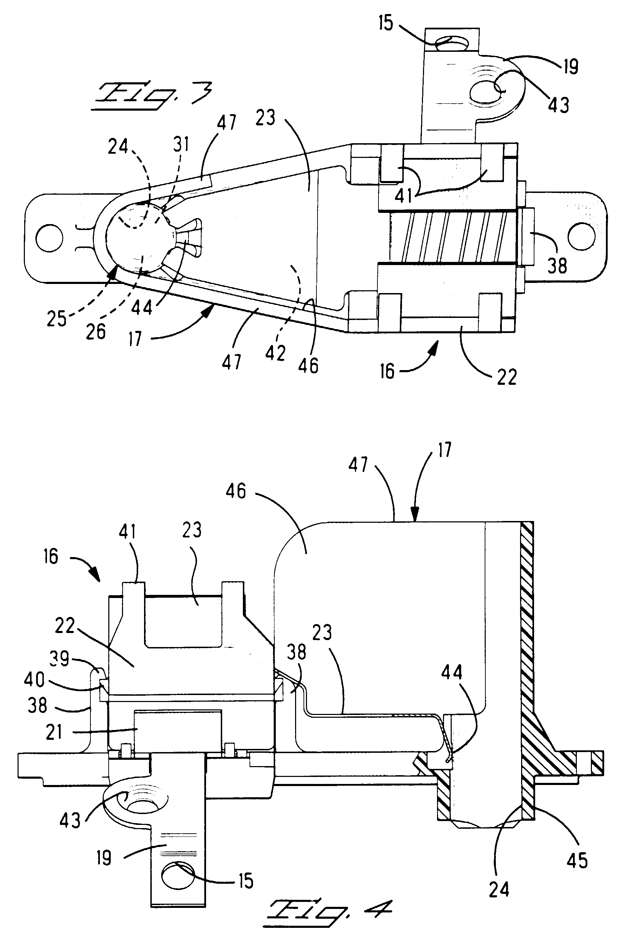

The present invention finds particular application in an aircraft in which the fuel is stored in cells which may exceed thirty in number and it is necessary for the pilot to know the amount of fuel remaining. Referring first to the prior art arrangement of FIGS. 1 and 2, a pair of concentric tubes are disposed in each fuel cell and the volume of fuel in each cell affects the capacitance between the inner tube 12 and the outer tube 14. The capacitance is measured on a fuel gauge (not shown) to which each pair of tubes is connected electrically. A telescoping tubular subassembly (also not shown) is affixed to the end of the shorter outer tube of each tube pair to be adjusted to increase or decrease the effective length of the outer tube with respect to the longer inner tube extending therebeyond to tune the circuit of the particular tube pair. In the prior art arrangement (FIGS. 1-2), a frame of dielectric material is secured to each outer tube and electrical leads are connected to outer tube 14 and to the inner tube 12 from screws secured to the frame. An inner conductor of a coaxial lead has a spade terminal terminated thereto and is connected to the electrical lead for the inner tube 12 at a connecting screw, while a single-conductor lead is connected in similar fashion to the electrical lead for the outer tube 14, and both the coaxial and single-conductor leads are clamped to the frame spaced from the connections with the electrical leads. Rearwardly of the clamps, the coaxial and single-conductor leads may be grouped together for handling and routing, preferably within an outer jacket such as heat-recoverable tubing.

An arcuate conductive shield member is disposed adjacent to the outer tube 14 and spaced therefrom a limited distance, such as one-quarter inch; a securing bar extends from a vertical rib of the shield member to the clamps and also serves to ground the shield member to the outer conductor of the coaxial cable at its clamp. The curvature (or outer diameter) of the outer tube must be complementary to the curvature (or inner diameter) of the arcuate section of the shield member spaced slightly therefrom, and the frames and outer tubes of each of the tube pairs must have corresponding sizes in order to attach the frame and have a satisfactory electrical contact. Thus, a wide variety of frames and arcuate members must be available. The frame, although made of plastic and aluminum, contributes additional weight to the aircraft, especially considering the number of connectors which are required.

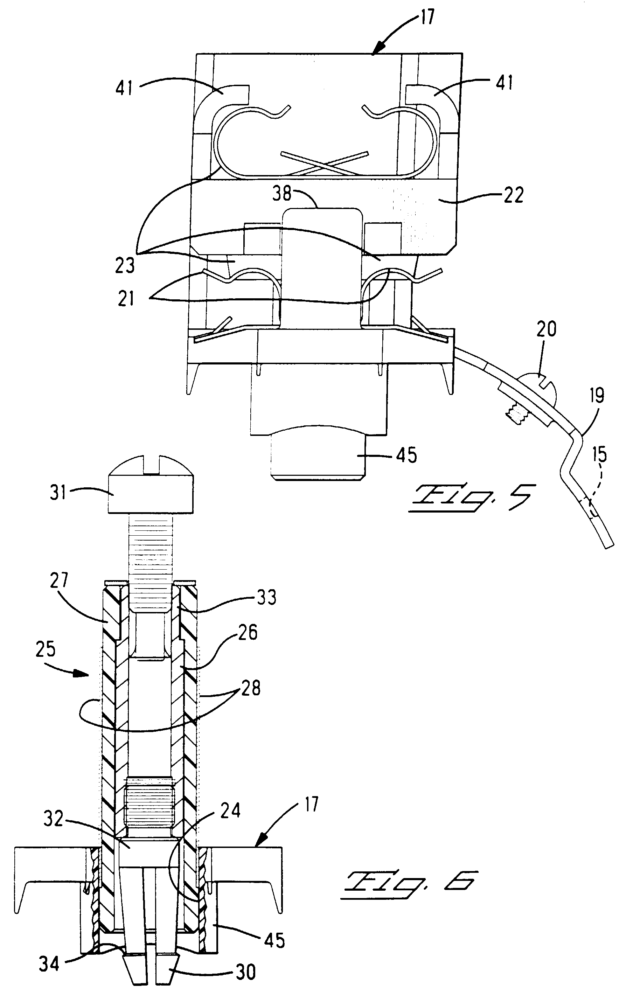

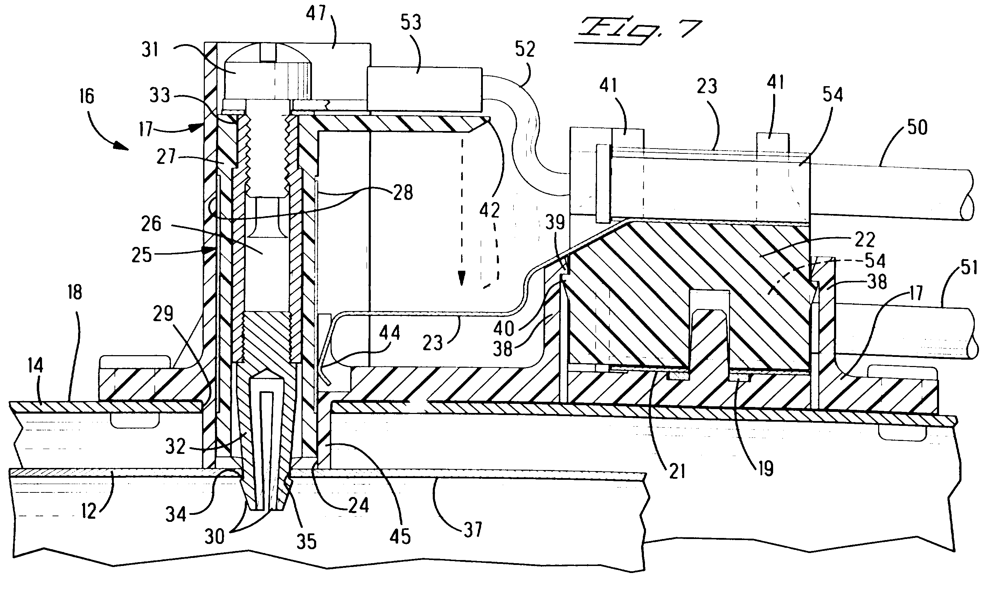

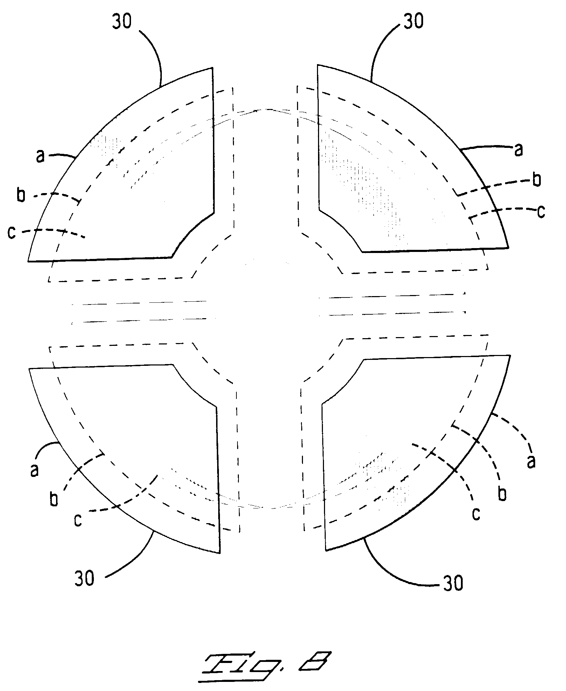

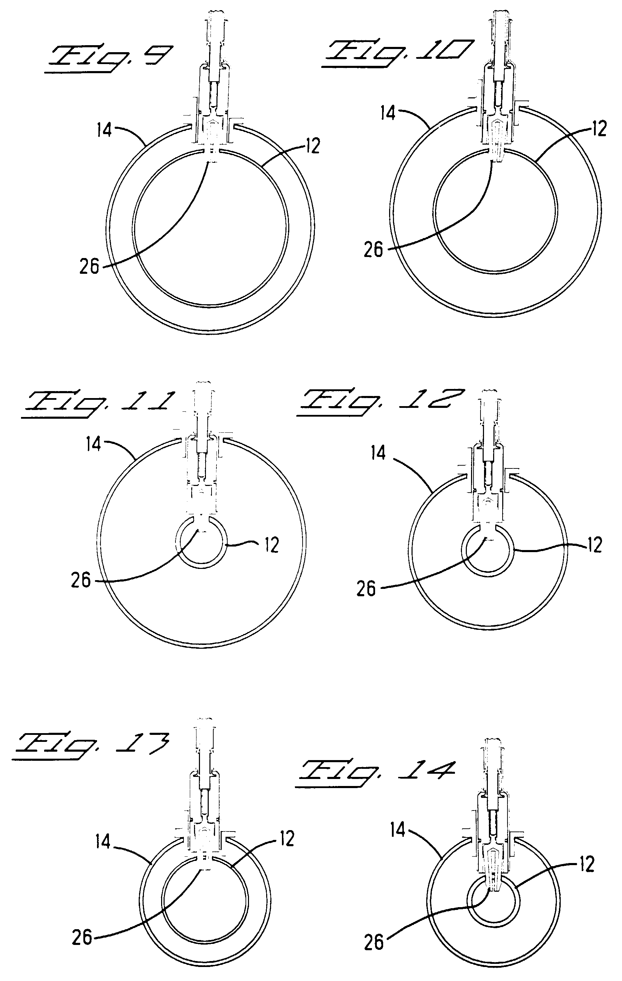

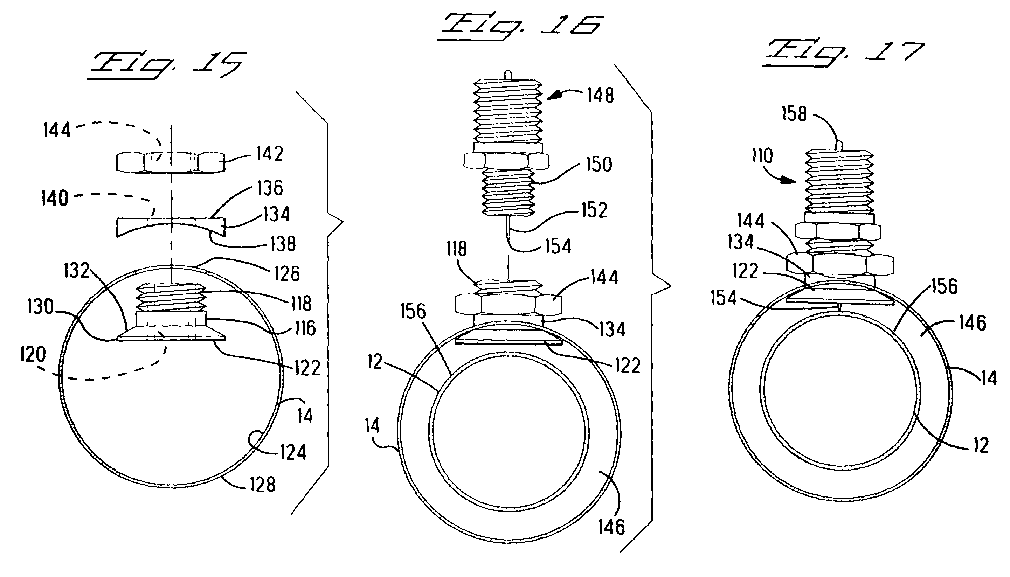

The present invention in FIGS. 3 to 8 has a housing assembly 16 connected to the outer wall 18 (FIG. 7) of the outer tube 14. Preferably, the housing assembly 16 is firmly secured to the outer tube 14 by riveting to prevent movement of the housing assembly 16 due to vibrations produced during flight of the aircraft.

The housing assembly 16 is composed of several parts. One part is a plastic frame 17 that supports the other parts. A second part is the outer tube contact 19 which is electrically conductive and is in electrical engagement with outer tube 14 at hole 15 such as by riveting, and also has an end which is retained in the plastic frame 17. The outer tube contact 19 has a threaded opening 43 formed externally of the plastic frame 17 and a screw 20 is received thereinto, by which an electrical lead (not shown) is connected to outer contact 19, to extend from the screw 20 to the fuel gauge. A third part is the retention spring 21 which is in physical and electrical contact with the outer tube contact 19 (as seen in FIG. 7). The retention spring 21 is retained in the housing assembly 16 by a fourth part, the retainer insert 22. The retainer insert 22 is preferably formed from plastic and may be affixed to plastic frame 17 by being snapped between opposed wall sections 38 using cooperating latches 39,40 (FIGS. 4 and 7). A fifth part, the ground spring 23 is snapped into the retainer insert 22 under fingers 41 thereof.

A bore 24 is formed in the housing assembly 16 such that when the housing assembly 16 is secured to the outer tube 14, the bore 24 is approximately perpendicular to the outer tube 14. A sleeve assembly 25 (FIG. 6) is disposed in the bore 24 and consists of a contact assembly 26, an insulating sleeve 27 and a shielding jacket 28, all bonded together. The insulating sleeve 27 is preferably formed from a non-conducting plastic material. The shielding jacket 28 is preferably formed from stainless steel. Copper containing alloys are avoided because of the partial solubility of said alloys in fuel which tends to clog filters in the fuel system. The contact assembly 26 has an engaging means at one end as will be described, and a connection screw 31 at an opposite end. The sleeve assembly 25 is frictionally movably within the bore 24 in the housing assembly 16 and at any eventual position (as shown in phantom in FIG. 7), spring arm 44 of the ground spring 23 in the housing assembly 16 remains in electrical engagement with the shielding jacket 28. It is preferred that the ground spring 23 have a split end to contact the shielding jacket 28. When the housing assembly 16 is connected to the outer tube, a flange 45 of plastic frame 17 concentric with bore 24 extends through opening 29 of outer tube 14, and the engaging means of the contact assembly 26 extends through opening 29 of outer tube 14 within flange 45 and toward the inner tube 12. The contact assembly 26 has a first end 32 and an opposite second end 33. The second end 33 of the contact assembly 26 is electrically connected to the fuel gauge either directly or by an electrical lead.

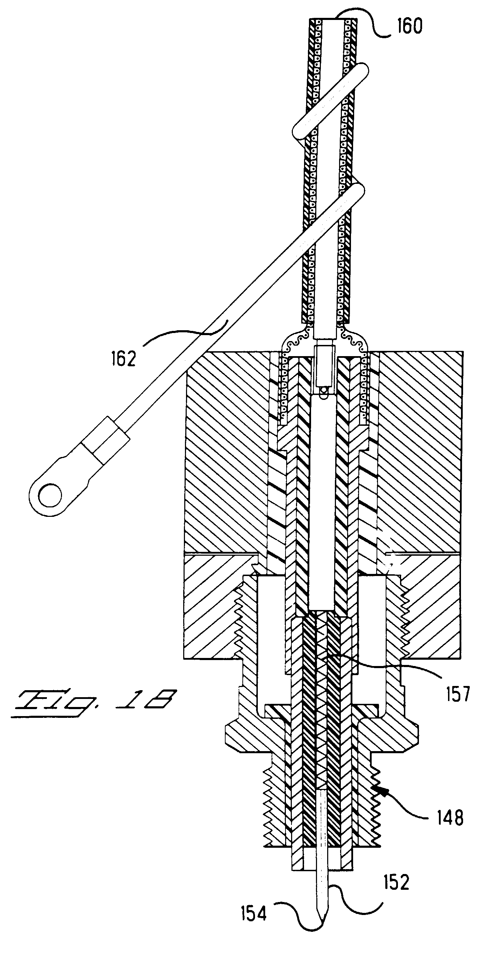

Referring to FIGS. 6 and 7, the first end 32 of the contact assembly 26 is connected to the engaging means. The engaging means, preferably, has at least two fingers 30 and optionally four formed thereon, each finger being resilient. Each finger 30, further has a shoulder 34 formed thereon with a tapered portion from the shoulder 34 toward the narrower end of the finger 30. An opening 35 is formed in the inner tube 12 such that the opening 35 in the inner tube 12 is aligned with the opening 29 in the outer tube 14. In this manner, moving the contact assembly 26 outwardly from the bore 24 and toward the inner tube 12, disposes the first end 32 of the contact assembly 26 in the opening 35 in the inner tube 12 such that the shoulders 34 extend beyond the inner wall 37 of the inner tube 12 to engage the inner tube 12. FIG 7 illustrates in phantom the deflected position of a finger 30 when being inserted through opening 35. FIG. 8 shows three positions for the fingers 30. Position "a" is the rest position, position "b" is the engaged position and position "c" is maximum deflection. Thus, removal of the contact assembly 26 from the inner tube 12 is difficult and can be achieved only by the application of considerable force to obtain maximum deflection of the fingers 30.

The contact assembly 26 makes electrical contact with the inner tube 12 through the engaging means (fingers) 30, and an electrical cable 50 (FIG. 7) completes the electrical circuit between the inner tube 12 and the fuel gauge. The connection screw 31 is disposed on the opposite end 33 of the contact assembly 26 and is connected to the contact assembly 26. The screw 31 permits easy connection of the electrical lead 52 using a conventional spade terminal 53 (FIG. 7) terminated onto the end of lead 52. The portion of the contact assembly 26 above the shoulder 34 and distal from the first end 32, is tapered, being narrower immediately adjacent to the shoulder 34 and being wider toward the second end 33. This structure assists in retaining the contact assembly 26 in the opening 35 in the inner tube 12 and restricts movement of the contact assembly 26 through the opening 35 and into the inner tube 12. Together with the resiliency of the fingers 30, movement of the contact assembly 26, caused by vibration, is virtually eliminated.

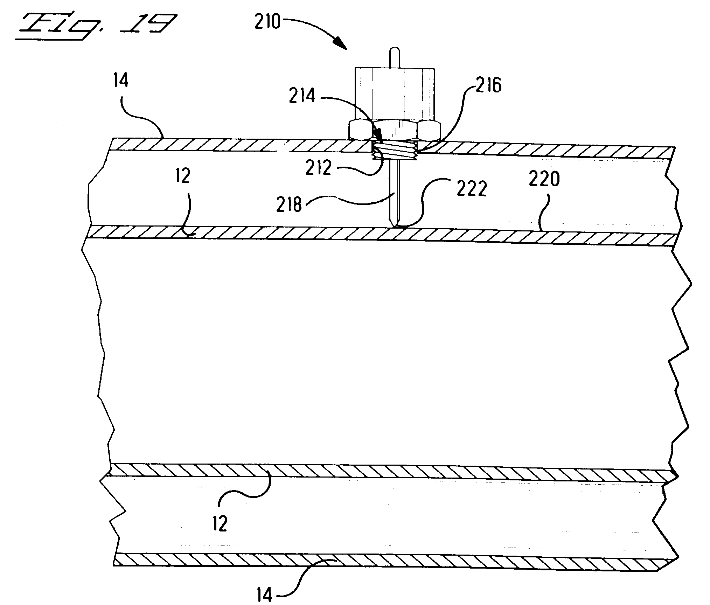

The contact assembly 26 may be slidably movable for a distance which is equal to, or greater than, the space between the inner tube 12 and the outer tube 14. As shown in FIGS. 9 to 14, the relative diameters of the inner tube 12 and the outer tube 14 may vary and the distance between the tubes will vary accordingly. A large diameter outer tube 14 may have a small diameter inner tube 12 in which case, the contact assembly 26 must slide a greater distance in the bore 24 in the housing assembly 16 in order to engage the opening 35 in the inner tube 12. The versatility of the present connector permits use with inner 12 and outer 14 tubes having any combination of respective diameters.

An electrical lead is connected between the outer tube 14 and the fuel gauge so that the fuel gauge can measure an electrical signal between the inner tube 12 and the outer tube 14. The electrical lead may be connected to the outer tube 14 by a screw 20 received in the outer tube contact 19. It is preferred that the capacitance between the tubes be the signal which is measured and indicated as the amount of fuel which is present.

Due to the vibration and violent movement which the aircraft undergoes in normal flight, the connector is also provided with retaining means such as retention spring 21 and ground spring 23, to hold the electrical cables 50,51. The retaining means may be a spring, a snap, a clip or other restraining means and preferably are part of the housing assembly 16. Additionally, the cables 50,51 have grounding means such as a connector 54 terminating the outer conductor of each cable. The grounding means is to reduce any stray capacitance between the leads which might distort the signal to the fuel gauge.

A wing 42 is formed and, for stabilization, is disposed abutting the contact assembly 26 connection as shown in FIGS. 3 and 7. The wing 42 is disposed in a channel 46 in the plastic frame 17 formed between wall sections 47, and contacts the channel when the screw 31 is turned in either a clockwise or a counterclockwise direction. Thus, torquing of the screw 31 is permitted while preventing the contact assembly 26 from turning.

In a second embodiment of connector 110 in FIGS. 15 to 18, an arcuate conductive shield member is disposed adjacent to the outer tube 14 and spaced therefrom a limited distance, such as one-quarter inch; a securing bar extends from a vertical rib of the shield member to the outer conductor of the coaxial cable at its clamp. The curvature (or outer diameter) of the outer tube must be complementary to the curvature (or inner diameter) of the arcuate section of the shield member spaced slightly therefrom, and the frames and outer tubes of each of the tube pairs must have corresponding sizes in order to attach the frame and have a satisfactory electrical contact. Thus, a wide variety of frames and arcuate members must be available. The frame occupies space externally of the outer tube such that space must be provided in an environment in which space is in short supply. Also, the frame, although made of lightweight plastic or aluminum, contributes additional weight to the aircraft, especially considering the number of connectors which are required.

The connector of a second embodiment shown in FIGS. 15 to 18, has a body member 116 which is threaded 118 and has a center bore 120. A head 122 is formed on one end of the body member 116. The head 122 is disposed inside the outer tube 14 adjacent to the inner wall 124 of the outer tube 12. The body member 116 extends through an opening 126 in the outer tube 14 such that the body extends approximately perpendicularly outwardly from the outer wall 128 of the outer tube 14. It is preferred that the head 122 be tapered from the outer peripheral surface 130 of the head 122 toward the body member 116 such that the tapered portion 132 cooperates with the curved inner wall 124 of the outer tube 14.

A spacer 134 has a first surface 136 and an opposite second surface 138. The second surface is arcuate and conforms to the curvature of the outer tube 14. The spacer 134 has an axial opening 40 formed therethrough and receiving therein the body member 116. A nut 142, having a threaded opening 144 therein, is disposed on the body member 116. The threads cooperate and the nut 142 is tightened to secure the body member 16 to the outer tube 14 such that the head 122 is flush with the inner wall 124 of the outer tube 14, and the spacer 134 is between the nut 142 and the outer tube 14, abutting the outer wall 128 of the outer tube 14.

The inner tube 12 is disposed inside the outer tube 14 separated from the outer tube 14 by a space 146. The size of the space 146 is a function of the relative diameter of the inner tube 12 as compared to the diameter of the outer tube 14. This varies from fuel tank to fuel tank and even within any one fuel tank. However, there is a maximum space which is provided with the greatest diameter of the outer tube 14 and the least diameter of the inner tube 12.

An adapter 148 is removably disposed in the center bore 120 in the body member 116. Preferably, the center bore 120 in the body member 116 has threads formed therein. The first end 150 of the adapter is threaded to cooperate with the threads in the center bore 120 in the body member 116. A coaxially mounted conductor 152 is disposed along the vertical axis of the adapter 148 and is electrically insulated from the adapter 148. The conductor 152 is retractable. Although the conductor 152 may be manually retracted, it is preferred that the conductor be spring loaded. The conductor has a first end 154 which extends across the space 146 between the inner wall 124 of the outer tube 14 and the outer wall 156 of inner tube 12. The first end 154 of the conductor 152 preferably has at least one sharpened point formed thereon. The sharpened point breaks any oxide coating on the outer wall 156 of the inner tube 12 to assure electrical contact. The spring 157 applies approximately a 120 gram force load on the conductor 152 to break the oxide coating and maintain electrical contact under gravitational loading as may be experienced in an aircraft environment. The second end 158 of the conductor 152 is connected to a first lead 160 which is, in turn, connected to a sensor. A second lead 162 is connected to the adapter 148 and through the adapter 148 to the body member 116 and to the outer tube 14. The other end of the second lead 162 is connected to the sensor to permit measurement of the capacitance between the outer tube 14 and the inner tube 12.

The thickness of the spacer 134, that is the distance between the first surface 136 and the second surface 138, may be selected to accommodate the difference in the diameters of the outer tube 14 and the inner tube 12, i.e., the space 146. When the diameter of the inner tube 12 is slightly smaller than the diameter of the outer tube 14, the space 146 is relatively small. In this situation, the thickness of the spacer 134 is relatively large. In this manner, a larger portion of the adapter 148 is disposed in the spacer 134 and conductor 152 extends beyond the head 122 a comparatively short distance to contact the outer wall 156 of the inner tube 12 with sufficient resiliency. On the other hand, when the diameter of the inner tube 12 is much smaller than the diameter of the outer tube 14, the space 146 is relatively large. Accordingly, the thickness of the spacer 134 is relatively small such that the adapter 148, disposed in the spacer 134, extends into the head 122 and the conductor 152 extends beyond the head 122 a comparatively large distance to contact the outer wall 156 of the inner tube 12. The spacer 134 is selected to accommodate for large variations in tube diameters and the spring loaded contact is used to accommodate small variations in tube diameters, such as may occur in variations in concentricity or bent tubes. The spring 157 must serve as a means to maintain force between the sharpened tip 154 of the conductor 152 and the outer wall 156 of the inner tube 12, under gravitational loading.

The present invention has been described herein for use with concentric cylindrical tubes, but is equally applicable with polygonal tubes in place of cylinders.

In another embodiment of connector 210 shown in FIG. 19, the opening 212 in the outer tube 14 is threaded and the adapter 214 has cooperating threads formed on the first end 216 thereof. The adapter 214 is threadably connected to the outer tube 14 so that the spring loaded coaxial conductor 218 (as in FIG. 18) contacts the outer wall 220 of the inner tube 12. As in the embodiment of FIGS. 15 to 18, the at least one sharpened end 222 of the conductor 218 breaks any oxide coating on the outer wall 220 of the inner tube 12 and electrical contact is maintained. The spring loading also assures that the coaxial conductor 218 extends completely between the adapter 214 and the inner tube 12 irrespective of the spacing between the inner tube 12 and the outer tube 14. That is, the spring loading urges the coaxial conductor 218 outwardly from the adapter 214 until the conductor 218 contacts the inner tube 12. The alternate embodiment is mounted on the outer tube 14 by simply inserting the adapter 214 into the threaded opening 212 and rotating the adapter 214 until the conductor 218 contacts the inner tube 12. This embodiment may be easily installed on existing cylinders in fuel tanks aboard the aircraft as a retrofit.

The embodiments disclosed herein are lightweight, compact, occupying little space and are easily installed. Each embodiment may be used with the concentric tubes irrespective of the curvature of the tubes or of the spacing between the tubes.

## Claims

1. A connector (10,110,210) for a fuel gauge in a fuel cell having an inner tube (12) and a spaced-apart concentric outer tube (14), and a spacing (146) formed between the walls of each tube, the connector including a housing (16;116,148;214) mountable to the outer wall and having conductive portions (19;116,148;214 and 26,152,218) respectively electrically connectable to the outer and inner walls and also connectable to the fuel gauge, characterized in that:
the housing (16;116,148;214) includes a bore (24) therethrough aligned with a corresponding opening (29,126,212) through the outer tube (14), and an inner contact assembly (26) insulated from conductive sections of the housing (16;116,148;214) and mounted within said housing bore (24) to extend beyond said housing and through said outer wall opening (29,126,212), and said inner contact assembly (26) includes a first end (32,154,222) and a second end (33,158), wherein at least the first end (32,154,222) of the inner contact assembly (26) is movable with respect to the housing to become at least electrically engaged with the inner tube (12) and the second end (33,158) is exposed outwardly of said outer tube (14) for being electrically connected to the fuel gauge.

2. The connector (10) of claim 1, further characterized in that:
housing (16) is an assembly including an insulative frame (17,22) adapted to clamp to a pair of electrical leads (50,51), further including a contact electrically connecting one (51) the leads to the outer tube (14), and further including grounding portions (21,23,28,44) connecting shields of the leads (50,51) to contact (19) and shielding the inner contact assembly (26).

3. The connector of claim 2, wherein a sleeve assembly (25) contains the inner contact assembly (26) and is mounted in the bore (24), and the first end (32) includes at least two resilient fingers (30) extending to ends received into and held in an opening (35) formed in the inner tube (12) and forming an electrical connection with the inner tube (12), the finger ends having shoulders (34) thereon insertable through the opening in the inner tube and resisting removal therefrom, and the sleeve assembly (25) is slidably movable a distance in the bore (24) sufficient for the ends of fingers (30) to be inserted through opening (35) of the inner tube (12).

4. The method of assembling the connector of claim 2, comprising the steps of:
forming openings (29,35) in the walls of the outer tube (14) and the inner tube (12) such that the openings are aligned with respect to one another,
mounting the housing (16) on the outer wall of the outer tube (14), with a flange (45) of the frame (17) being received in the opening (25) in the outer tube (14), and
slidably moving the sleeve assembly (25) in the bore (24) toward the inner tube (12) until the first end (32) of the inner contact assembly (26) is inserted through the opening (35) in the inner tube and engages inner tube (12),
electrically connecting a first lead (50) to the second end (33) of the inner contact assembly (26), and
electrically connecting a second lead (51) to contact (19).

5. The connector (110,210) of claim 1, further characterized in that:
the housing at least includes a conductive adapter (148,214) through which the bore extends, the adapter being affixed to outer tube (14) and extending through an opening (126,212) to an inner end (150,216) concluding inside outer tube (14), the inner contact assembly including a conductor (152) being coaxially mounted and retractably disposed in the bore of adapter (148,214) and electrically insulated therefrom, the conductor (152) including said first end (154) and said second end (158), the first end (154) engaging the outer wall of the inner tube (12) and forming an electrical connection therewith.

6. The connector (110,210) of claim 5, wherein the coaxially mounted conductor (152) is spring loaded such that force is applied to the conductor (152) for first end (154) thereof to engage the outer wall (156) of the inner tube (12).

7. The connector (110,210) of claim 5, wherein the first end (154) of the coaxially mounted conductor (152) has at least one sharpened point formed thereon, the at least one sharpened point assuring electrical connection with the outer wall (156) of the inner tube (12).

8. The connector (210) of claim 5, wherein the opening (212) in the outer tube (14) is threaded and the adapter (214) has complementary threads formed on inner end (216) thereof so that inner end (216) is threadable into opening (212), thereby securing the adapter (214) to the outer tube (14) and establishing an electrical connection therewith.

9. The connector (110) of claim 5, further comprising:
a body (116) extending through opening (126) of outer wall (14) and having a threaded bore (120) therethrough into which threaded inner end (150) of adapter (148) is threadable, and further having a head (122) formed on an end thereof, the head (122) being disposed within and against the inner wall (124) of the outer tube (14), and body (116) having threads formed thereon;
a nut (142) threaded onto the body (116) outside of the outer wall of the outer tube (14) to secure the outer tube (14) between the head (122) and the nut (142); and
a spacer (134) having a surface (138) shaped to conform to the outer wall of the outer tube (14), the spacer (134) having an axial opening (140) for receipt of body (116) therethrough and being disposed between the outer wall of the outer tube (14) and the nut (142).

10. The method of assembling the connector (110) of claim 9, comprising the steps of:
inserting the body (116) into the opening (126) in the outer tube (14) such that the head (122) is adjacent to the inner wall (124) of the outer tube (14) and the body (116) extends outwardly from the outer wall of outer tube (14),
placing the spacer (134) on the extending body (116) such that the surface (138) contacts the outer wall of the outer tube (14),
threading the nut (142) onto the body (116) and securing the body of the connector to the outer tube (14) with the spacer (134) between the nut (142) and the outer tube (14),
disposing the inner tube (12) within the outer tube (14),
threading the adapter (134) into the bore (120) in the body (116) until the first end (154) of the coaxially mounted conductor (152) electrically engages the outer wall (156) of the inner tube (12), and
connecting a first electrical lead (160) to the coaxially mounted conductor (152) and connecting the second electrical lead (162) to the body (116) of the connector.
